## Europäisches Patentamt
## European Patent Office
## Office européen des brevets

(11) Publication number: **0 136 370**
**B1**

(12) # EUROPEAN PATENT SPECIFICATION

(45) Date of publication of patent specification: **26.04.89**

(21) Application number: **83109912.2**

(22) Date of filing: **04.10.83**

(51) Int. Cl.⁴: **F 16 H 45/02**

(54) **Hydraulic control system for lock-up clutch.**

(43) Date of publication of application:
**10.04.85 Bulletin 85/15**

(45) Publication of the grant of the patent:
**26.04.89 Bulletin 89/17**

(84) Designated Contracting States:
**DE FR GB**

(56) References cited:
**EP-A-0 037 050**
**EP-A-0 067 594**
**DE-A-2 853 115**
**FR-A-2 478 553**
**GB-A-2 017 842**
**GB-A-2 097 492**
**GB-A-2 115 505**
**US-A-4 289 048**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Sugano, Kazuhiko**
**No. 3-4688-1, Sobudai**
**Zama City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

### Background of the invention

The present invention relates to a hydraulic control system for a lock-up clutch of a hydrodynamic device of an automatic transmission for a vehicle, according to the preamble part of claim 1.

In the case of automatic transmission having a hydrodynamic device, such as a torque converter, with a lock-up clutch, the lock-up clutch is kept engaged when the vehicle speed is higher than a predetermined value during operation with a predetermined gear ratio or speed ratio. One of such hydraulic control systems is described in U.S. Patent No. 4,369,865 issued Jan. 25, 1983 to Sunohara et al. The known hydraulic control systems of the above kind pose the following problems. The first problem is in that since the lock-up clutch is left engaged as long as the above mentioned travelling condition is satisfied even if the vehicle is coasting, the vibrations from the engine is transmitted to the drive system and thus the driveability is degraded. The second problem is in that the engine revolution speed during coasting operation is elevated when the lock-up clutch is engaged as compared to the case when the lock-up clutch is not engaged and thus fuel economy during coasting operation is poor as compared to the latter case. The engine revolution speed is elevated because there is no slip when the lock-up clutch is engaged during coasting operation.

A hydraulic control system according to the preamble part of claim 1 is known from EP—A— 0 067 594. This known system comprises a lock-up control valve having a spool movable between a non-lock-up position and a lock-up position. Means in the form of an oil passage are provided for hydraulically engaging the lock-up clutch when said spool assumes said lock-up position and releasing the lock-up clutch when said spool assumes said non-lockup position. Further means in the form of a governor pressure line leading to the lock-up control valve are adapted for hydraulically actuating said spool of said lock-up control valve towards said lock-up position thereof in accordance with a predetermined basic mode of lock-up operation, i.e. when the vehicle speed exceeds a value E as shown in Fig. 4. Further means in the form of a detector switch and a solenoid are responsive to the position of the control member for generating an output signal when the position of the control member attains a predetermined value. Means being constituted by a clutch release preventing mechanism, a first control line, a second control line, a fourth control valve and a clutch release mechanism include the aforementioned solenoid operable responsive to said output signal for forcibly disengaging said lock-up clutch. More particularly, the lock-up control valve is designed to assume the lock-up position thereof to allow line fluid pressure to be supplied to the lock-up clutch when the vehicle speed exceeds a predetermined value as is shown in Fig. 4. In order to define the lock-up operation mode, the aforementioned three spool valves are provided. These valves are not fluidly disposed in the governor fluid pressure line leading to the lock-up control valve and thus, do not constitute any element of the hydraulical actuating means. One valve is disposed between the lock-up clutch and the lock-up control valve and has a bias port connected to a throttle fluid pressure line and operates such that when the throttle opening degree assumes a value as indicated by the line segment C in Fig. 4, it is shifted from its spring set position to a second position where the fluid pressure is discharged from the lock-up clutch, thereby disengaging same. Even if the throttle opening degree is above the line segment C, it is preferable to engage the lock-up clutch. To accomplish this, another of the three valves is disposed in the throttle fluid pressure line to discharge the throttle fluid pressure from the beforementioned valve when the vehicle speed is indicated by the governor fluid pressure in the line leading to the lock-up control valve exceeds a value as indicated by line segment D. In order to release the lock-up when the throttle opening degree drops and becomes very low, the third valve actuable by the solenoid is disposed in the throttle fluid pressure line between the beforementioned two valves. The solenoid actuates the third valve when the accelerator is released below a throttle opening degree as indicated by line segment F in Fig. 4, thus allowing the supply of line fluid pressure, instead of throttle fluid pressure, to the first valve, which is shifted to the position where the lock-up clutch is disengaged.

As is readily apparent from the foregoing description of the known hydraulic control system, same is relatively complicated in structure since it needs a plurality of additional valves and an additional solenoid.

Accordingly, it is an object underlying the present invention to provide a hydraulic control system for a lock-up clutch according to the preamble part of claim 1 which is able to release the lock-up clutch during coasting operation or kick-down operation, the structure of which is simple and does not necessitate the provision of a relatively large number of additional members.

The solution of this object is achieved by the features of claim 1.

The dependent claims contain advantageous embodiments of the present invention.

### Brief description of the drawings

Fig. 1 is a schematic view of a power transmission mechanism of a three-speed automatic transmission; and

Figs. 2 and 3, when combined, illustrate a circuit diagram of a hydraulic control system according to the present invention.

### Detailed description of the invention

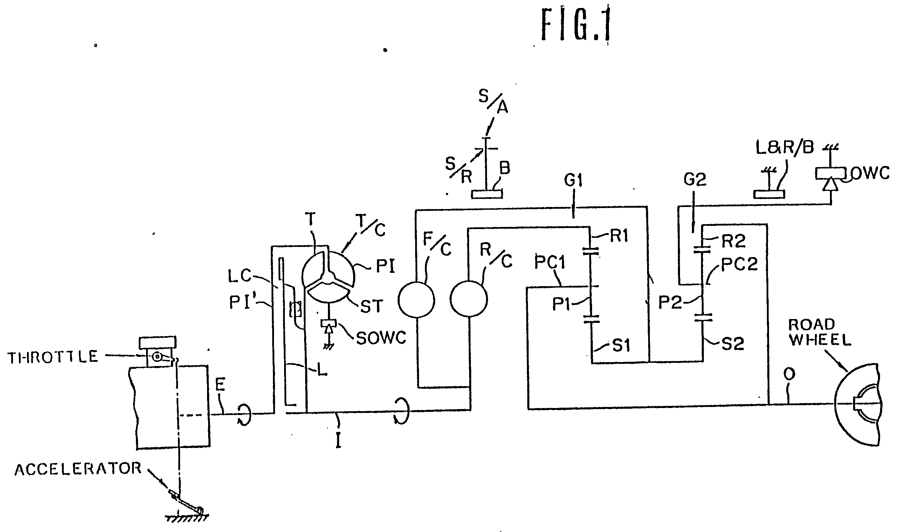

Referring to Figs. 1 to 3, the preferred embodiment according to the present invention is described.

Referring to Fig. 1, there is shown a schematic view of a power transmission mechanism of a three-speed automatic transmission having three forward speed ratios and one reverse speed ratio. This power transmission comprises an input shaft I to which rotary power is delivered from an engine output shaft E via a torque converter T/C, an output shaft O which transmits driving power to a final drive, a first planetary gear set G1, a second planetary gear set G2, a front clutch F/C, a rear clutch R/C, a band brake B, a low and reverse brake L & R/B, and one-way clutch OWC. The first planetary gear set G1 comprises an internal gear R1, a sun gear S1, and a carrier PC1 carrying pinion gears P1 meshing with the sun gear S1 and internal gear R1 simultaneously. The second planetary gear set G2 comprises an internal gear R2, a sun gear S2, and a carrier PC2 carrying pinion gears P2. The carrier PC1 is connected to an output shaft O, while the sun gear S1 is connectable with an input shaft I via the front clutch (which may be called as a high and reverse clutch) F/C, and the internal gear R1 is connectable to the input shaft I via the raer clutch R/C. The internal gear R2 is connectd to the output shaft O, and the sun gear S2 is connected to the sun gear S1. The carrier PC2 is prevented from rotating in its reverse direction by the one-way clutch OWC. A low and reverse brake L & R/B is arranged to anchor the carrier PC2. The band brake B is arranged to anchor the sun gears S1 and S2. This band brake B is actuated by a servo having a servo-apply chamber S/A and a servo-release chamber S/R. When the fluid pressure is applied to the servo-apply chamber S/A, the band brake B is applied, while when the fluid pressure is applied to the servo-release chamber S/R, the band brake B is released irrespective of the presence of the fluid pressure in the servo apply chamber S/A. The torque converter T/C includes a pump impeller PI, a turbine runner T, a stator ST and a lock-up clutch L. The pump impeller PI is connected via a torque converter cover PI' to the engine output shaft E. The turbine runner T is connected to the input shaft I, and the stator ST is connected via a one-way clutch SOWC to a stationary portion of the transmission. The lock-up clutch L connected to the turbine runner T is axially movable and defines a lock-up clutch fluid pressure chamber LC in cooperation with the torque converter cover PI'. The lock-up clutch L is pressed against the torque converter cover PI' when fluid pressure in the lock-up clutch fluid pressure chamber LC is lower than that within the torque converter T/C and rotates integrally with the torque converter cover PI'. The detail construction of the lock-up clutch L is described in U.S. Patent No. 4,305,487 issued Dec. 15, 1981 to Sunohara.

The front clutch F/C, rear clutch R/C, band brake B and low and reverse brake L & R/B (one-way clutch OWC) are engageable in the predetermined combinations shown by the following Table to provide three forward speed ratios and one reverse speed ratio.

TABLE

| | F/C | R/C | L & R/B (OWC) | B S/A | B S/A |
|---|---|---|---|---|---|
| First speed | | o | o | | |
| Second speed | | o | | o | o |
| Third speed | o | o | | o | o, |
| Reverse | o | | o | | o |

In the Table, the sign "o" indicates for each of clutches and brakes, the clutch or brake in question is engaged or applied. What is denoted by a label (OWC) below the brake B1 means that the first speed ratio is established by the one-way clutch OWC even if the brake B1 is not applied. However, in this first speed ratio, it is not possible for the output shaft O to drive the engine (that is, no engine braking is provided). What is indicated by the sign "o" in the column below B means that the servo apply chamber S/A and/or servo release chamber S/R in question are supplied with fluid pressure.

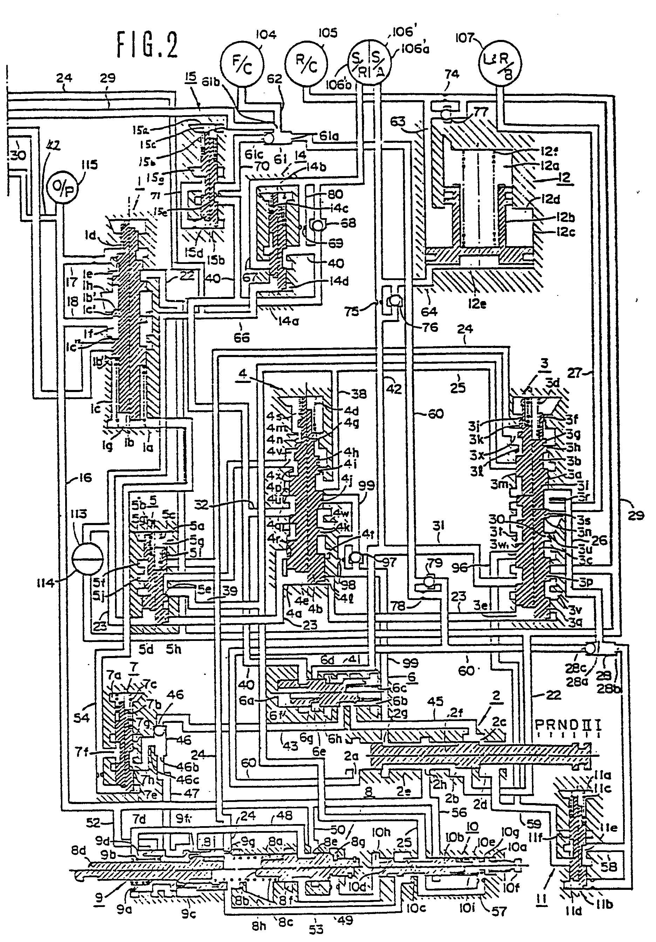

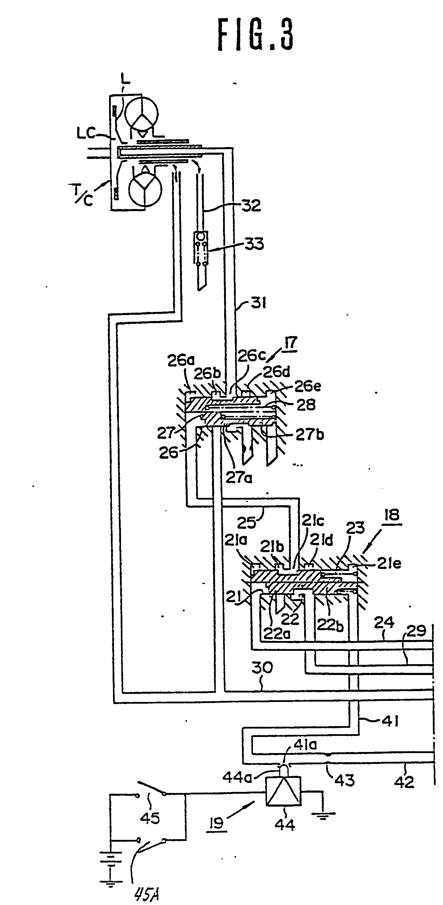

Referring to Figs. 2 and 3, the hydraulic control system comprises a regulator valve 1, a manual valve 2, a 1—2 shaft valve 3, a 2—3 shift valve 4, a 3—2 downshift valve 5, a line pressure booster valve 6, a pressure modifier valve 7, a throttle valve 8, a throttle fail-safe valve 9, a throttle modulator valve 10, a first manual range pressure reducing valve 11, an accumulator 12, a 3—2 timing valve 14, a front clutch pressure reducing valve 15, governor valves 113, 114, a lock-up valve 17, a vehicle speed cut valve 18. As illustrated, these valves are connected with the torque converter T/C, lock-up clutch fluid chamber LC, front clutch F/C, rear clutch R/C, servo apply chamber S/A of the band brake B, servo release chamber S/R of the band brake B, low and reverse brake L & R/B, and oil pump O/P. The hydraulic control system is substantially the same as that of European Pat. Appln. EP—A—59 425 filed Feb. 24, 1982 by Nissan Motor Co., Ltd. (see Fig. 2) and commonly assigned herewith. The hydraulic control system according to the present invention is different from that described in the European Pat. Appln. EP—A—59 425 in the provision of the lock-up valve 17 and speed cut valve 18 for controlling the lock-up clutch L.

Referring particularly to Fig. 3, the vehicle speed cut valve 18 comprises a spool 22 slidably disposed in a valve bore 21 and a spring 23 biasing the spool 22 to the left as viewed in Fig. 3. The valve bore 21 is formed with five ports 21a, 21b, 21c, 21d and 21e, while the spool 22 is formed with two lands 22a and 22b having the same diameter. The port 21a communicates with an oil conduit 24 connected with the governor valve (113, 114). The port 21d communicates with an oil conduit 29 connected with the high and reverse clutch F/C. The port 21c communicates via an oil conduit 25 with a port 26a of the lock-up valve 17. The port 21e communicates with an oil conduit 41 which is mentioned later. The port 21b is a drain port.

The lock-up valve 17 comprises a spool 27 slidably disposed in a valve bore 26, and a spring 28 biasing the spool 27 to the left as viewed in Fig. 3. The valve bore 26 is formed with five ports 26a, 26b, 26c, 26d and 26e, while the spool 27 is formed with two lands 27a and 27b having the same diameter. The port 26a communicates with the port 21c of the vehicle speed cut valve 18 as mentioned before. The port 26b communicates with an oil conduit 30 which supplies the torque converter T/C a pressurized oil from the regulator valve 1. The port 26c communicates via an oil conduit 31 with the lock-up clutch oil chamber LC. The ports 26d and 26e are drain ports, respectively. The torque converter supply pressure is supplied to the inside of the torque converter T/C from the oil conduit 30 and the oil within the torque converter T/C is discharged to an oil conduit 32. The oil in the oil conduit 32 is drained via a pressure maintaining valve 33. The lock-up oil chamber LC communicates with the oil conduit 31 as mentioned before.

The solenoid valve 19 is arranged to open or close an opening 41a formed through the oil conduit 41 (i.e., an output oil conduit) which is connected via an orifice 43 with an oil conduit 42 which is supplied with a line fluid pressure from the regulator valve 1. The opening 41a is closed or opened by a plunger 44a of a solenoid 44. The oil conduit 41 communicates with the port 21e of the vehicle speed cut valve 18 as mentioned before. The solenoid 44 is electrically connected with an idle switch 45 which is actuated in response to an idle condition of the engine. The idle switch 45 is operatively mounted on an accelerator (see Fig. 1) and is closed or "ON" when no depression force is applied to the accelerator and otherwise "OFF".

The operation is described

A description is made now as to the ordinary running state wherein the depression force is applied on the accelerator.

In this case, the solenoid 44 is "OFF", so that the oil within the oil conduit 41 is discharged through the opening 41a and no pressure exists in the oil conduit 41. Therefore, the port 21e of the vehicle speed cut valve 18 is drained.

In the first or second speed ratio, the spool 4b of the 2—3 shift valve 4 is disposed in the position indicated by the right half thereof as viewed in Fig. 2 and no oil pressure is supplied to the high and reverse clutch F/C and thus no oil pressure exists in the oil conduit 29. Under this condition, since no oil pressure is supplied to the oil conduit 29, no oil pressure acts through the oil conduit 25 on the port 26a of the lock-up valve 17 irrespective of the position of the vehicle speed cut valve 18. Therefore, the spool 27 of the lock-up valve 17 assumes the position indicated by the upper half thereof as viewed in Fig. 3 under the action of the spring 28. In this position of the spool 27, the oil conduit 30 is allowed to communicate with the oil conduit 31, thus allowing the lock-up torque converter supply pressure in the oil conduit 30 to be supplied to the lock-up clutch oil chamber LC. As a result, the pressure within the lock-up clutch oil chamber LC becomes equal to that within the torque converter T/C, leaving the lock-up clutch L released.

Subsequently, when the spool 4b of the 2—3 shift valve 4 switches from the second speed ratio position indicated by the right half thereof as viewed in Fig. 2 to the third speed ratio position indicated by the left half thereof as viewed in Fig. 2, the oil pressure supplied to the high and reverse clutch F/C appears and is elevated. If the vehicle speed increases and the governor fluid pressure increases accordingly, the spool 22 of the vehicle speed cut valve 18 switches to the position indicated by the bottom half thereof as viewed in Fig. 3. In this position of the spool 22, the oil conduit 29 is allowed to communicate with the oil conduit 25, and thus the actuating pressure for the high and reverse clutch F/C starts acting on the port 26a of the lock-up valve 17. When the actuating pressure for the high and reverse clutch F/C increases and overcomes the force of the spring 28, the spool 27 of the lock-up valve 17 switches to the position indicated by the bottom half thereof as viewed in Fig. 3. When the spool 27 of the lock-up valve 17b has switched to the position indicated by the bottom half thereof, the port 26c is allowed to communicate with the port 26d which is a drain port and thus the oil within the lock-up clutch oil chamber LC is discharged through the oil conduit 31, thus putting the lock-up clutch into the engagement state thereof.

If, in the above mentioned state wherein the lock-up clutch L is engaged during operation with third speed ratio, the throttle opening degree is decreased to zero to put the vehicle into a coasting state, the system operates in the following manner. In the coasting state, since the depression force is removed from the accelerator, the idle switch 45 is turned "ON" to put the solenoid 44 into "ON". Thus, the solenoid 44 urges the plunger 44a to close the opening 41a. With the opening 41a being closed, the oil pressure in the oil conduit 41 (output oil pressure) is elevated and becomes equal to the pressure in the oil conduit 42. That is, the pressure in the oil conduit 41 becomes equal to the line pressure. Thus, the line pressure acts on the port 21e of the vehicle speed cut valve 18. Whenever the line pressure acts on the port 21e, the spool 22 of the vehicle speed cut valve 18 always switches to or is forced to assume the position indicated by the upper half thereof as viewed in Fig. 3, thus suspending the supply of the oil pressure to the oil conduit 25 so as to allow the spring 28 to push back the spool 28 of the lock-up valve 17 to the position indicated by the upper half thereof as viewed in Fig. 3. Therefore, the oil conduit 30 is allowed to communicate with the oil conduit 31 so as to release the lock-up clutch L. As will now be understood, the lock-up clutch L is released always whenever the idle switch 45 is turned "ON". Owing to this operation, the transmission of vibrations from the engine to the drive system is prevented. Further, since the engine revolution speed drops during coasting, the fuel economy improves.

If desired, the solenoid 44 is electrically connected with a kickdown switch 45A as shown in Fig. 3. The kickdown switch 45a is turned "ON" when the accelerator pedal is depressed deeply into a kickdown state. If the solenoid 44 is electrically connected with the kickdown switch 45A, the lock-up clutch L is released at kickdown and engine revolution speed is elevated depending upon the degree of slip in the torque converter T/C and thus a torque multiplication by the torque converter is obtained. Therefore, a stronger acceleration is obtained for kickdown operation.

## Claims

1. A hydraulic control system for a lock-up clutch (L/C) of a hydrodynamic torque transmission device (T/C) of an automatic transmission for a vehicle having an engine with a control member variable, in position, with a power demand on the engine, comprising a lock-up control valve (17) having a spool (27) movable between a non lock-up position (a spring set position) and a lock-up position; means (30) for hydraulically engaging the lock-up clutch (L/C) when said spool (27) assumes said lock-up position and releasing the lock-up clutch (L/C) when said spool (27) assumes said non lock-up position thereof; means (18, 24, 25, 29) for hydraulically actuating said spool (27) toward said lock-up position thereof in accordance with a predetermined basic mode of lock-up operation; means (45, 45A) responsive to the position of the control member for generating an output signal when the position of the control member attains a predetermined value; means (41, 41a, 44, 44a) including a solenoid (44) operable responsive to said output signal for forcibly disengaging said lock-up clutch, characterized in that said hydraulically actuating means comprises a vehicle speed-cut valve (18) including a spool (22), said spool (22) being movable between a first position wherein a fluid pressure ($P_{F/C}$) is supplied to said lock-up control valve (17) to urge its spool (27) toward said lock-up position and a second position wherein said fluid pressure is discharged from said lock-up control valve (17) to leave its spool (27) to assume said non lock-up position, said spool (22) being movable responsive to a governor pressure to said first position from said second position when said governor pressure is higher than a predetermined value, and said forcibly disengaging means comprises a fluid passage (41) having one end connected to said vehicle speed-cut valve (18) such that a fluid pressure therein acts on said spool (22) of said vehicle speed-cut valve (18) as opposed to the governor fluid pressure ($P_G$) acting thereon and an opposite end connected to a source of line fluid pressure which is higher than said governor fluid pressure via an orifice (43), said fluid passage (41) being formed with an opening (41a) adapted to be closed by a valve (44a) actuable by said solenoid (44).

2. A hydraulic control system as claimed in claim 1, characterized in that when said valve (44a) closes said opening (41a), the line pressure acts on said spool (22) of said vehicle speed-cut valve (18) to move said spool (22) to said second position thereof regardless of the application of the governor pressure ($P_G$) to said spool (22), thereby disengaging said lock-up clutch (LC).

3. A hydraulic control system as claimed in claim 1 or 2, characterized in that said means (45, 45A) responsive to the position of the control member generates said output signal when the accelerator assumes an engine idle position or a kickdown position, so that said hydraulically engaging means releases the lock-up clutch (L/C) when the accelerator assumes the engine idle position or the kickdown position.

## Patentansprüche

1. Hydraulisches Steuersystem für eine Überbrückungskupplung (L/C) einer hydrodynamischen Drehmomentübertragungsvorrichtung (T/C) eines automatischen, Getriebes für Fahrzeuge, die einen Motor mit einem Steuerteil, das in seiner Lage entsprechend einer Leistungsanforderung an den Motor veränderlich ist, aufweist, mit einem Überbrückungs-Steuerventil (17), das einen Ventilschieber (27) aufweist, der zwischen einer Nicht-Überbrückungsstellung (einer federbestimmten Lage) und einer Überbrückungsstellung bewegbar ist, einer Einrichtung (30), um hydraulisch die Überbrückungskupplung (L/C) in Eingriff zu bringen, wenn der Ventilscheiber (27) diese Überbrückungsstellung einnimmt und um die Überbrückungskupplung (L/C) aus ihrem Eingriffszustand zu lösen, wenn der Ventilschieber (27) seine Nicht-Überbrückungsstellung einnimmt, einer Einrichtung (18, 24, 25, 29), um den Ventilschieber (27) hydraulisch in seine Überbrückungsstellung entsprechend einer vorgegebenen Grundarbeitsweise des Betriebes im Überbrückungszustand zu betätigen, einer Einrichtung (45, 45A), die in Abhängigkeit von der Lage des Steuerteiles zur Erzeugung eines Ausgangssignales arbeitet, wenn die Lage des Steuerteiles einen bestimmten Wert erreicht, einer Einrichtung (41, 41a, 44, 44a) mit einem Schaltmagneten (44), der in Abhängigkeit von dem Ausgangssignal betätigbar ist, um zwangsweise die Überbrückungskupplung außer Eingriff zu bringen, dadurch gekennzeichnet, daß die hydraulische Betätigungseinrichtung ein fahrzeuggeschwindigkeitabhängiges Ventil (18) aufweist, das einen Ventilscheiber (22) enthält, wobei der Ventilschieber (22) zwischen einer ersten Stellung, in der ein Fluiddruck ($P_{F/C}$) an das Überbrückungs-Steuerventil (17) gelegt ist, um dessen Ventilschieber (27) in die Überbrückungsstellung zu drängen, und einer zweiten Stellung bewegbar ist, in der der Fluiddruck von dem Überbrückungs-Steuerventil (17) entlastet wird, um dessen Ventilschieber (27) zu entlasten, so daß dieser seinen Nicht-Überbrückungszustand einnehmen kann, wobei der Ventilschieber (22) in Abhängigkeit von einem Regierdurck aus der zweiten Stellung in die erste Stellung bewegbar ist, wenn der Reglerdruck höher ist als ein bestimmter Wert, und die zwangsläufig entkuppelnde Einrichtung einen Fluidkanal (41) umfaßt, der mit einem Ende mit dem fahrzeugeschwindigkeitsabhängigen Ventil (18) verbunden ist, derart, daß ein Fluiddruck in diesem auf den Ventilschieber (22) des fahrzeugeschwindigskeitabhängigen Ventiles (18) entgegengesetzt zu dem Reglerfluiddruck ($P_G$), der an dem Ventilschieber (22) anliegt, einwirkt und ein gegenüberliegendes Ende (des Fluidkanales (41)) über eine Drosselstelle (43) mit einer Quelle eines Leitungsfluiddruckes verbunden ist, der höher ist als der Reglerfluiddruck, wobei der Fluidkanal (41) mit einer Öffnung (41a) versehen ist, die durch ein Ventil (44a) verschlossen werden kann, das durch den Schaltmagneten (44) betätigbar ist.

2. Hydraulisches Steuersystem nach Anspruch 1, dadurch gekennzeichnet, daß dann, wenn das Ventil (44a) die Öffnung (41a) verschließt, der Leitungsdruck auf den Ventilschieber (22) des fahrzeuggeschwindigkeitsabhängigen Ventiles (18) einwirkt, um den Ventilschieber (22) in seine zweite Stellung zu bewegen, unabhängig von der Einwirkung des Reglerdurckes ($P_G$) auf den Ventilschieber (22), wodurch die Überbrückungskupplung (LC) entkuppelt wird.

3. Hydraulisches Steuersystem nach Anspruch 1 oder 2, dadurch gekennzeichnet, daß die Einrichtung (45, 45A), die von der Stellung des Steuerteiles abhängig ist, das Ausgangssignal erzeugt, wenn das Beschleunigungspedal eine Motorleerlaufstellung oder eine Starkbeschleunigungsstellung (kickdown) einnimmt, so daß die hydraulische Eingriffseinrichtung die Überbrückungskupplung (L/C) lost, wenn das Beschleunigungspedal die Motorleerlaufstellung oder die Starkbeschleunigungsstellung (kickdown) einnimmt.

## Revendications

1. Système de commande hydraulique pour un embrayage de pontage (L/C) d'un dispositif hydrodynamique de transmission du couple (T/C) d'une transmission automatique pour un véhicule ayant un moteur avec un organe de commande variable, en position, avec une demande de puissance sur le moteur, comprenant une soupape de commande de pontage (17) ayant un tambour (27) mobile entre une position de non pontage (une position établie par ressort) et une position de pontage; un moyen (30) pour mettre hydrauliquement en engagement l'embrayage de pontage (L/C) lorsque ledit tambour (27) prend ladite position de pontage et libérer l'embrayage de pontage (L/C) lorsque ledit tambour (27) prend ladite position de non pontage; un moyen (18, 24, 25, 29) pour actionner hydrauliquement ledit tambour (27) vers sa position de pontage selon un mode prédéterminé de base d'opération de pontage; un moyen (45, 45A) répondant à la position de l'organe de commande pour produire un signal de sortie lorsque la position de l'organe de commande atteint une valeur prédéterminée; un moyen (41, 41a, 44, 44a) comprenant un solénoide (44) fonctionnant en réponse audit signal de sortie pour dégager de force ledit embrayage de pontage, caractérisé en ce que ledit moyen d'actionnement hydraulique comprend une soupape (18) de coupure de la vitesse du véhicule comprenant un tambour (22), ledit tambour (22) étant mobile entre une première position où une pression de fluide ($P_{F/C}$) est fournie à ladite soupape de commande de pontage (17) pour solliciter son tambour (27) vers ladite position de pontage et une seconde position où ladite pression de fluide est évacuée de ladite soupape de commande de pontage (17) pour laisser son tambour (27) prendre ladite position de non pontage, ledit tambour (22) étant mobile en réponse à une pression de régulateur à ladite première position, à partir de ladite seconde position, lorsque ladite pression de régulateur est supérieure à une valeur prédéterminée et ledit moyen de dégagement de force comprenant un passage de fluide (41) ayant une extrémité connectée à ladite soupape de coupure (18) de la vitesse du véhicule de manière qu'une pression de fluide agisse sur ledit tambour (22) de ladite soupape de coupure de la vitesse du véhicule (18) en s'opposant à la pression du fluide de régulateur ($P_G$) qui agit dessus et une extrémité opposée connectée à une source d'une pression de fluide de ligne qui est plus importante que ladite pression de fluide de régulateur via un trou (43), ledit passage de fluide (41) présentant une ouverture (41a) pouvant être fermée par une soupape (44a) pouvant être actionnée par ledit solénoïde (44).

2. Système de commande hydraulique selon la revendication 1, caractérisé en ce que lorsque ladite soupape (44a) ferme ladite ouverture (41a), la pression de ligne agit sur ledit tambour (22) de ladite soupape (18) de coupure de la vitesse du véhicule pour déplacer ledit tambour (22) à sa seconde position quelle que soit l'application de la pression de régulateur ($P_G$) audit tambour (22), pour ainsi dégager ledit embrayage de pontage (LC).

3. Système de commande hydraulique selon la revendication 1 ou 2, caractérisé en ce que ledit moyen (45, 45A) répondant à la position de l'organe de commande produit ledit signal de sortie lorsque l'accélérateur prend une position de ralenti du moteur du une position de rétro-contact de manière que ledit moyen d'engagement hydraulique libère l'embrayage d'immobilisation (L/C) lorsque l'accélérateur prend la position de ralenti du moteur du la position de rétro-contact.

FIG.1

# EP 0 136 370 B1

## FIG.2

# FIG.3